# EUROPEAN PATENT SPECIFICATION

(11) **EP 0 658 620 B1**
(45) Date of publication and mention of the grant of the patent: **09.08.2000**
(21) Application number: 94119873.1
(22) Date of filing: 15.12.1994
(51) Int. Cl.: C11D 17/00, C09K 7/02

(54) **Structured surfactants**
Strukturierte Tenside
Tensio actifs structurés

(30) Priority: 15.12.1993 GB 9325626; 05.04.1994 GB 9406678; 09.05.1994 GB 9409175
(43) Date of publication of application: 21.06.1995
(73) Proprietor: ALBRIGHT & WILSON UK LIMITED, Oldbury, Warley, West Midlands B68 0NN (GB)
(72) Inventor: Bryan, Edward, Stourbridge, West Midlands DY7 6RS (GB); Grover, Boyd William, Bromsgrove, Worcestershire B60 2EZ (GB); Nicholson, William John, Halesowen, West Midlands B62 9JH (GB)
(74) Representative: Savidge, Roger Gordon Madgwick

(56) References cited:
- EP-A- 0 151 884
- EP-A- 0 430 602
- EP-A- 0 452 106
- EP-A- 0 530 708
- EP-A- 0 623 670

## Description

The present invention relates to aqueous based surfactant compositions which are, or which are capable of forming, structured surfactant systems, said compositions being especially useful as functional fluids e.g. in drilling operations such as oil field drilling. The present invention especially provides aqueous based surfactant compositions which comprise soluble weighting agents.

### Introduction

Structured surfactant systems have been developed in the detergent art for their ability to suspend solid builders or abrasives, said builders or abrasives typically being present in laundry detergents or hard surface cleaners respectively.

A structured surfactant system is a pourable composition which has the ability to suspend solid particles indefinitely, by virtue of the rheological properties of surfactant mesophases present in the surfactant system.

Structured surfactant systems normally comprise spherulites of surfactant and water in which the former is arranged in a plurality of concentric shells each formed from a bilayer of surfactant molecules.
The spherulites are dispersed in a continuous aqueous medium and are packed together to confer on the composition a yield point sufficient to resist any tendency to sedimentation or buoyancy of any solid particles dispersed in the composition, such as to maintain said particles indefinitely in suspension. However the shear stresses created by pouring or stirring the composition exceed the yield point and suffice to break the structure enabling the composition to be poured, pumped and stirred like a normal liquid.

Other surfactant mesophases, whether alone or interspersed with aqueous phase can provide similar rheological properties, for example "G" phase which is liquid crystal Lamellar Phase, of the type also known in the literature as "neat" phase or "lamellar" phase.

Structured surfactant systems are described in GB 2 123 846 and GB 2 153 380 and their use in functional fluids is described in EP-A-0430602.

"Functional fluids" is a term commonly used to embrace lubricants, including drilling and cutting fluids, hydraulic fluids and heat transfer fluids. "Drilling Fluid" is used herein to refer to fluids used in the drilling of bore holes in rock to lubricate and cool drill bits, and to transport rock cuttings away from the rock face. The term is also used herein to include "Spacer Fluids", which are used to clean the sides of bore holes prior to cementing. Drilling Fluids are used in the construction of deep wells and bore holes, and especially oil and gas wells. For convenience the term Drilling Fluids as used herein also embraces "Construction Muds", which are used in civil engineering and the construction industry to stabilise holes and excavations by preventing the breakdown of shales on exposure to water.

Aqueous structured surfactant based compositions, as, or for use in functional fluids are preferred to conventional oil based drilling fluid compositions on environmental grounds.

### Prior Art

EP-A-0430602 describes aqueous based structured surfactant compositions for use as drilling fluids, particularly for use in bore holes such as oil wells. The compositions of EP-A-0430602 may comprise conventional weighting agents, such as barite or haematite, to provide a composition of the required density. Said weighting agents are substantially insoluble in said compositions and are present as suspended solid particles.

### The Problem

Drilling fluids for use in deep drilling operations are required to have as high a density as possible, and thus it is customary to suspend solid particles of weighting agents, for example barite or haematite, in the drilling fluid, see for example EP-A-0430602. However, such suspensions are unsuitable for use when drilling into oil bearing rock formations themselves, because the solid particles from the drilling fluid tend to block the pores in the rock formation, interfering with the flow of oil from the rock. Therefore there is a need for drilling fluids which contain dissolved weighting agents, for use in the final stages of drilling . Such fluids are referred to as completion fluids. Similar fluids, sometimes referred to as "packing fluids", are often injected into the bore hole to fill the space between the pipe and sides of the hole.

Suitable salts for use as soluble weighting agents include calcium chloride, calcium bromide. zinc bromide, and salts of iron and barium. Unfortunately, it has not been possible hitherto to formulate satisfactory structured surfactants with any of the above salts because the anionic surfactants, such as alkyl benzene sulphonates, which are preferred for use in structured surfactants form insoluble precipitates with polyvalent metals.

### The Invention

We have now discovered that aqueous compositions comprising polyvalent metal salts of anionic surfactants present as, or capable of forming, structured surfactants can be obtained by mixing together: a water soluble polyvalent metal salt or polyvalent metal base; and an alkyl benzene sulphonic acid, or a water soluble salt thereof with a weaker base than said polyvalent metal salt or base, in the presence of alkyl ether sulphuric acid or alkyl ether carboxylic acid or a water soluble salt of an alkyl ether sulphuric acid or alkyl ether carboxylic acid.

The salt or base may be added to a mixture of alkyl benzene sulphonic acid and ether sulphate or carboxylate, or preferably, the alkyl benzene sulphonic acid is added to a mixture of base and ether sulphate or carboxylate, to produce the water soluble salt of the alkyl benzene sulphonic acid in situ. Some residual salt or base may be present in the compositions after the neutralisation of the acids.

### Embodiments of the present invention

The present invention provides a pourable aqueous composition comprising at least 2% by weight of a water soluble polyvalent metal salt of a C₈-C₂₀ alkyl polyalkyleneoxy sulphuric acid or C₈-C₂₀ alkyl polyalkyleneoxy carboxylic acid, at least 1% by weight of a polyvalent metal salt of a C₈-C₂₀ alkyl benzene sulphonic acid, and optionally a water soluble, inorganic, salt or base of a polyvalent metal.

Preferably the present invention provides a pourable aqueous composition as aforesaid with at least 1% by weight of said water soluble, inorganic, salt or base, wherein said inorganic salt or base is present in an amount sufficient to form a spherulitic structured surfactant system or a G-phase.

According to a second embodiment the invention provides a method of preparing a composition as aforesaid which comprising reacting a soluble inorganic salt or base of said polyvalent metal with said alkyl benzene sulphonic acid or a water soluble salt thereof which is more weakly basic than said inorganic salt or base in the presence of an aqueous solution of said alkyl polyalkyleneoxy sulphuric or carboxylic acid or a water soluble salt thereof.

A preferred embodiment of the present invention provides the use of a pourable aqueous composition as aforesaid as a functional fluid, especially a drilling fluid.

### Surfactants

The polyvalent metal salt of the C₈-C₂₀ alkyl benzene sulphonic acid, is preferably a calcium or magnesium salt thereof, most preferably a calcium or magnesium salt of a C₁₀-C₁₄ alkyl benzene sulphonic acid. Other suitable polyvalent metal salts of said acid include the zinc, iron and barium salts, amongst others.

Preferably, the C₈-C₂₀ alkyl polyalkyleneoxy sulphuric acid or carboxylic acid is a C₁₀-C₁₈ alkyl polyalkyleneoxy sulphuric acid or carboxylic acid.

Preferably the alkyl polyalkyleneoxy sulphuric or carboxylic acid has an average of from 1 to 50 alkyleneoxy groups, preferably 1.5 to 20, e.g. 2 to 10. Alternatively the polyalkyleneoxy groups may comprise a similar number of propyleneoxy groups or butyleneoxy groups, or of a mixture of ethyleneoxy and propyleneoxy and/or butyleneoxy groups. The polyethyleneoxy group may also comprise one or more glyceryl groups. The number of alkyleneoxy groups is generally higher when the more insoluble polyvalent metals are present. The number of alkyleneoxy groups should be at least sufficient to provide a water soluble salt of the polyvalent metals present.

The relative proportions by weight of alkyl benzene sulphonate and alkyl ether sulphate or alkyl ether carboxylate may vary from 1:15 to 2:1, preferably 1:10 to 1.5:1, most preferably 1:7 to 2:1, especially 1:6 to 1.5:1. Typically the proportion of alkyl ether sulphate or alkyl ether carboxylate is sufficient to maintain the alkyl benzene sulphonate in a liquid or in a fluid mesophase.

The total concentration of surfactant in the composition will typically lie in the range 5 to 25% by weight, e.g. 8 to 20%, especially 10 to 18%.

The surfactant may optionally comprise minor proportions of other anionic or nonionic surfactants such as alkyl sulphates, aryl sulphates, alkyl sulphosuccinamates, alkyl sulphosuccinates, aromatic sulphonates, phosphate esters, olefin sulphonates, paraffin sulphonates, isethionates, taurides, soaps, alcohol alkoxylates, fatty acid ethoxylates, alkyl polyglycosides, sugar esters, amine oxides, alkanolamides, alkyl phenol ethoxylates, ethylene glycol esters, fatty acid dialkylolamides, fatty acid monoalkylolamides, fatty acid monoalkylolamide ethoxylates, or fatty alcohols.

### Polyvalent metal

The polyvalent metal should be one that forms a water soluble alkyl polyoxyalkylene ethoxylate and is usually divalent or less preferably trivalent, e.g. calcium or magnesium. Other suitable polyvalent metals include zinc, iron and barium. The water soluble, inorganic salt or base may for example be calcium chloride, calcium bromide, calcium bicarbonate, zinc chloride, zinc bromide, barium chloride, ferric chloride, calcium hydroxide or barium hydroxide. The electrolyte may additionally comprise alkali metal or ammonium salts such as sodium chloride, ammonium chloride, sodium bromide, potassium chloride or caesium iodide. Normally a single polyvalent metal will be used in any given composition, however mixed metalions may be used and may be added during the preparation together or in any order.

The concentration of said water soluble, inorganic polyvalent metal salt or base may be from 0 to 70% by weight of the composition, preferably 0.5 to 60%, e.g. 1 t 50%, especially 2 to 45%. Said salt or base is preferably present in the composition in an amount up to saturation, however in certain compositions the concentration of salt or base may exceed the saturation level, whereby the excess may be present as undissolved material suspended in said composition.

The compositions of the invention preferably contain sufficient surfactant and dissolved electrolyte to form a stable structured (e.g. lamellar or spherulitic) surfactant system. Such systems may optionally be used to suspend solid weighting agents such as calcite, barite, calcium sulphate, barium sulphate, haematite, iron carbonate, galena or other dense minerals or insoluble salts. Although not generally preferred, suspended solid salts or bases may be present in any proportion consistent with maintaining a pourable composition e.g. up to 70%, more usually less than 50%, typically less than 20%. The compositions in use normally contain suspended mineral particles such as shale or other rock cuttings.

### Density, Initial yield, Viscosity

The densities of the compositions of the present invention typically lie within the range 0.8gcm⁻³ to 3.0gcm⁻³, preferably 0.9gcm⁻³ to 2.5gcm⁻³, most preferably 1.0gcm⁻³ to 2.0gcm⁻³ dependent upon the conditions encountered during the drilling operation. However, the density of the composition whilst being sufficient to ensure efficient drilling and to provide the required rheological characteristics, should not be so great as to hamper the circulation of the composition during the drilling operation.

The viscosity at a shear rate of 21s⁻¹ of the compositions typically lie within the range 0.01 Pas to 3.0 Pas at 20°C, preferably 0.02 to 2.0, most preferably 0.05 to 1.5, as measured on a controlled shear stress rheometer.

The initial yield of the compositions of the present invention is preferably sufficient to support solid matter, such as particles of shale, indefinitely. Preferably the initial yield of the compositions lies in the range 0.01 to 4.0 NM⁻², preferably 0.02 to 2.0, most preferably 0.03 to 1.0NM⁻².

### Production of Drilling Muds

The surfactants and salts may optionally be supplied to the drilling site as preformed muds or as structured surfactant systems, preferably spherulitic systems,at typical use concentrations. Said systems may be weighted to the desired density prior to use.

The surfactants and salts may optionally be supplied as unstructured surfactant systems, which may optionally have electrolyte and/or water added prior to use to provide a structured surfactant system or as individual components for the preparation of the compositions and weighting thereof on site prior to use.

Preferably the surfactants and salts may optionally be supplied as concentrated compositions according to the invention which form structured surfactant systems on dilution. Optionally, electrolyte may be added to increase the density of the composition and/or to aid the production of the structured surfactant system. Said concentrates are easily diluted to produce compositions of typical use strength, enabling the dilution to be affected on site prior to use. Particularly preferred are compositions adapted to form stable structured surfactant systems on dilution with brine (e.g. sea water), or with aqueous solutions of calcium or other polyvalent metal salts. Such concentrates may contain high levels of surfactant e.g. 30 to 70% by weight , more usually 35 to 60% e.g. 40 to 50%.

Compositions of the present invention therefore include concentrates adapted to be diluted to form drilling muds, drilling muds weighted with solid weighting agents, substantially solid-free completion and packing fluids, spacer fluids, and spent or recycle muds containing suspended rock cuttings.

The compositions may be modified by adding defflocculating polymers in order to improve viscosity and or stability. For example alkyl end stopped poly sulphonates or highly ethoxylated (eg. 20 to 50 mole Eto C₈₋₂₀ alcohols may be used as may alkyl polyglycosides with a high degree of polymerisation eg. greater than 3 more preferably greater than 6. Suitable deflocculants are discussed in EPO 623 670A2.

A characteristic feature of the compositions of the present invention is the tolerance of the systems to a wide range of electrolyte concentrations. Stable spherulitic, solid-suspending compositions are typically obtained at most concentrations of dissolved electrolyte between about 1 and about 45% by weight and sometimes in the total absence of dissolved electrolyte.

The pH of the composition may be controlled by adding bases such as lime or barium hydroxide. Compositions of our invention may contain anticorrosives such as phosphonocarboxylic acids, polyamine methylene phosphonates or alkyl polyoxyalkylene polycarboxylates, biocides such as tetrakis (hydroxymethyl) phosphonium salts or glutaraldehyde and antifoams such as silicones.

The invention will be further illustrated by way of the following examples.

### Example 1

A base composition was prepared by neutralising in water an alkyl ether sulphuric acid with CaO to form the calcium salt of the alkyl ether sulphuric acid (hereinafter referred to as CaAES). Excess CaO and a silicon defoamer were then added to the aqueous CaAES and finally an alkyl benzene sulphonic acid was added to the mixture to form the Calcium salt of alkyl benzene sulphonic acid (hereinafter referred to as CaLABS) in situ.

A series of compositions were prepared from the base composition comprising water, 10% wt/wt calcium C₁₂₋₁₄ alkyl 3 mole ethoxy sulphate (CaAES), 5% wt/wt calcium C₁₂₋₁₄ linear alkylbenzene sulphonate ("CaLABS"), and 0.1% silicone defoamer. To these compositions progressively larger amounts of calcium chloride dihydrate were added from 0% up to 45% wt/wt.

The compositions were stable and spherulitic at all levels of calcium chloride dihydrate addition between 15% and 38% by weight. Signs of instability were observed above 40% by weight of the calcium chloride. The density of the compositions at 38% calcium chloride was 1.25gcm^{3.}

### Example 2

Example 1 was repeated using a base solution having the composition :-

| | % wt/wt |
|---|---|
| CaAES | 12% |
| CaLABS | 2.5% |
| silicone defoamer | 0.5% |
| water | balance |

The composition was sable and spherulitic for calcium chloride dihydrate additions between 15% and 39% wt/wt.

### Example 3

Example 1 was repeated using a base solution having a composition :-

| | % wt/wt |
|---|---|
| CaAES | 14.5 |
| CaLABS | 3.0 |
| Silicone defoamer | 1.0 |
| water | balance |

The composition was stable and spherulitic for calcium chloride dihydrate additions between 0% and 25% wt/wt.

### Example 4

Example 1 was repeated using a base solution having the composition :-

| | %wt/wt |
|---|---|
| CaAES | 9.2 |
| CaLABS | 4.2 |
| Silicone defoamer | 0.5 |
| water | balance |

The composition was stable and spherulitic for calcium bromide dihydrate additions between 36% and 65% wt/wt. Densities of up to 1.6g.Cm³ were obtained.

### Example 5

Example 4 was repeated but with a base solution having the composition:-

| | %wt/wt |
|---|---|
| CaAES | 12 |
| CaLABS | 6 |
| Silicone defoamer | 0.75 |
| water | balance |

The composition was stable and spherulitic for calcium bromide dihydrate additions between 15% and 65% wt/wt.

### Example 6

A base composition was prepared by neutralising in water an alkyl ether sulphuric acid with MgO to form the Mg salt of the alkyl ether sulphuric acid (hereinafter "Mg AES"). CaO and silicone defoamer were added to the aqueous MgAES and finally alkyl benzene sulphonic acid was added to form CaLABS in situ.

A series of compositions were prepared from the base composition wherein the base composition comprised :-

| | % wt/wt |
|---|---|
| Mg AES | 9.2 |
| Ca LABS | 4.2 |
| Silicone defoamer | 0.5 |
| water | balance |

The composition was stable and spherulitic for calcium chloride dihydrate additions between 10% and 40% wt/wt.

### Example 7

The composition of Example 4, with the addition of 34% wt/wt calcium chloride dihydrate provides a functional fluid which is stable and spherulitic.
pH = 10.0
initial yield = 0.73 NM⁻²
viscosity @21s⁻¹ shear rate = 0.47 Pa S.
Density = 1.1gcm⁻³.

### Example 8

Example 1 was repeated using a base solution having the composition :-

| | % wt/wt |
|---|---|
| CaAES | 14.5% |
| CaLABS | 8 % |
| Silicone defoamer | 0.5% |
| water | balance |

The composition was a 1.5 x concentrate. The composition was stable and spherulitic for calcium chloride dihydrate additions of 4% by weight, and was a viscous, predominantly G-phase composition for calcium chloride dihydrate additions of 31% by weight.

The 4% calcium chloride dihydrate concentrated product was easily diluted to produce a stable product of typical working concentration. Further additions of calcium chloride dihydrate were made to produce a functional fluid of the required density comprising less than 31% by weight of calcium chloride dihydrate.

### Example 9

Two drilling muds were formulated comprising in wt. %:

| | **A** | **B** |
|---|---|---|
| Calcium C₁₂₋₁₄ alkyl 3 mole ethoxy sulphate | 6.8 | 6.7 |
| Calcium oxide | 0.8 | 0.8 |
| Water | 54.5 | 53.6 |
| Silicone antifoam | 0.2 | 0.4 |
| Calcium chloride dihydrate | 34.1 | 34.0 |
| Calcium C₁₂₋₁₄ alkylbenzene sulphonate | 3.6 | 3.9 |
| C₁₂₋₁₄ 20 mole ethoxylate (stabiliser) | 0 | 1.2 |

Sample A was highly flocculated, giving a viscoelastic fluid which gelled instantly on being sheared by stirring at 300 rpm. Prior to shearing A had a initial yield point of 0.1 N and a viscosity at 21 sec⁻¹ of 0.5 Pas. The viscosity fell under increased shear to a substantially constant viscosity of 0.17 Pas.

In contrast the sample B containing the stabiliser was a stable, fluid having an initial yield point of 0.1 N and a viscosity at 21 sec⁻¹ of 0.55 Pas rising with increasing shear to a constant value of 0.09 Pas.

After mixing at 300 rpm for 15 minutes the product had an initial yield of 0.17 N, and viscosity 21 sec⁻¹ of 0.38 Pas falling to a constant value of 0.087 Pas at higher shear rates. The composition was suitable for use as a drilling mud, spacer fluid, completion fluid or packing fluid.

### Example 10

A drilling mud formulation was prepared as follows :

| | **Wt %** |
|---|---|
| Calcium C₁₂₋₁₄ alkyl 3 mole ethoxy sulphate | 6.7 |
| Calcium oxide | 0.8 |
| H₂0 | 51.8 |
| Silicone antifoam | 0.4 |
| Calcium chloride dihydrate | 34.0 |
| C₁₂₋₁₄ alkylbenzene sulphonic acid | 3.9 |
| Poly AMPS stabiliser* | 3.0 |

| | |
|---|---|
| * The stabiliser was a polymer of 2-acrylamido-2-methylpropane sulphonic acid having a mean degree of polymerisation of 12. | |

The product was stable and had an initial yield of 0.17N, a viscosity of 21 sec⁻¹ of 1.7 Pas and a steady viscosity of 0.13 Pas. After 15 minutes at 300 rpm the initial yield point was 0.3N and the viscosity at 21 sec⁻¹ was 1.0 Pas falling to a steady value of 0.9 Pas at increasing shear.

## Claims

1. A pourable aqueous composition comprising at least 2% by weight of a water soluble polyvalent metal salt of a C₈-C₂₀ alkyl polyalkyleneoxy sulphuric acid or C₈-C₂₀ alkyl polyalkyleneoxy carboxylic acid, at least 1% by weight of a polyvalent metal salt of a C₈-C₂₀ alkyl benzene sulphonic acid, and optionally a water soluble, inorganic, polyvalent metal salt or base.

2. A composition according to Claim 1 containing at least 1% by weight of a water soluble, inorganic, polyvalent metal salt or base, wherein said polyvalent metal salt or base is present in an amount sufficient to form a spherulitic structured surfactant system.

3. A composition according to Claim 1 containing sufficient surfactant to form a G-phase.

4. A composition according to any foregoing claim having a density between 0.8gcm⁻³ and 3.5gcm⁻³.

5. A composition according to claim 4 having a density of from 1.0 to 2.0 gcm⁻³,

6. A composition according to any foregoing claim wherein said polyvalent metal is Ca, Mg, Zn, Ba or Fe.

7. A composition according to any foregoing claim wherein said alkyl polyalkyleneoxy sulphuric acid or alkyl polyalkyleneoxy carboxylic acid has from 1 to 50 ethyleneoxy groups.

8. A composition according to any foregoing claim having a weight ratio of alkyl benzene sulphonate to alkyl polyalkyleneoxy sulphate or carbonate of from 1:15 to 2:1.

9. A composition according to any foregoing claim wherein the total surfactant concentration is from 5 to 25% by weight.

10. A composition according to any foregoing claim wherein the surfactant additionally comprises a minor proportion based on the total weight of surfactant of other anionic of nonionic surfactants.

11. A composition according to any foregoing claim wherein the concentration of dissolved polyvalent metals salt or base is from 2% to 45% based on the total weight of the composition.

12. A composition according to any foregoing claim containing suspended solids.

13. A composition according to claim 12 wherein said suspended solids comprise an excess of said polyvalent metal salt or base, a substantially water insoluble weighting agent and/or rock cuttings.

14. A method of manufacture of a composition according to any foregoing claim which comprises reacting a polyvalent metal salt or base with an alkyl benzene sulphonic acid or a water soluble salt thereof with a base which is weaker than said polyvalent metal salt or base, in an aqueous medium containing an alkyl polyalkyleneoxy sulphuric or alkyl polyalkyleneoxy carboxylic acid or a water soluble salt thereof.

15. A method according to claim 14 wherein said salt of said alkyl polyalkyleneoxy sulphuric or carboxylic acid is a polyvalent metal salt.

16. A method of preparing a drilling mud which comprises: obtaining a concentrate which contains water, a polyvalent metal C₈₋₂₀ alkyl benzene sulphonate and a polyvalent metal C₈₋₂₀ alkyl 1 to 50 mole ethoxy sulphate or carbonate, at a concentration sufficient to form a mobile G-Phase; adding to said concentrate sufficient water or brine to provide a spherulitic composition.

17. A method according to claim 16 wherein said concentrate contains or has added thereto sufficient polyvalent metal salt and/or base to provide a drilling mud having a density greater than 0.9gcm⁻³.

18. The use of a composition according to any of Claims 1 to 13 as, or to prepare, a drilling mud.

## Patentansprüche

1. Gießbare wässrige Zusammensetzung,
enthaltend
- wenigstens 2 Gew.-% wasserlösliches, mehrwertiges Metallsalz einer C₈₋₂₀-Alkyl-polyalkylenoxy-schwefelsäure oder einer C₈₋₂₀ Alkyl-polyalkylenoxy-carbonsäure;
- wenigstens 1 Gew.-% mehrwertiges Metallsalz einer C₈₋₂₀-Alkyl-benzylsulfonsäure; und
- wahlweise ein wasserlösliches, anorganisches, mehrwertiges Metallsalz oder wasserlösliches, anorganisches, mehrwertiges Metallhydroxid.

2. Zusammensetzung nach Anspruch 1,
dadurch gekennzeichnet, daß
die Zusammensetzung (zwingend) wenigstens 1 Gew.-% wasserlösliches, anorganisches, mehrwertiges Metallsalz oder wasserlösliches, anorganisches, mehrwertiges Metallhydroxid enthält; und
dieses mehrwertige Metallsalz oder dieses mehrwertige Metallhydroxid in einem ausreichenden Anteil vorhanden ist, um ein sphärolithisches, strukturiertes Tensidsystem zu bilden.

3. Zusammensetzung nach Anspruch 1,
dadurch gekennzeichnet, daß
die Zusammensetzung eine ausreichende Menge Tensid enthält, um eine G-Phase zu bilden.

4. Zusammensetzung nach einem der Ansprüche 1 bis 3,
dadurch gekennzeichnet, daß
die Zusammensetzung eine Dichte im Bereich von 0,8 g/cm³ bis 3,5 g/cm³ aufweist.

5. Zusammensetzung nach Anspruch 4,
dadurch gekennzeichnet, daß
die Zusammensetzung eine Dichte im Bereich von 1,0 g/cm³ bis 2,0 g/cm³ aufweist.

6. Zusammensetzung nach einem der Ansprüche 1 bis 5,
dadurch gekennzeichnet, daß
das mehrwertige Metall Ca, Mg, Zn, Ba oder Fe ist.

7. Zusammensetzung nach einem der Ansprüche 1 bis 6,
dadurch gekennzeichnet, daß
diese Alkyl-polyalkylenoxy-schwefelsäure oder diese Alkyl-polyalkylenoxy-carbonsäure 1 bis 50 Ethylenoxy-Gruppen enthält.

8. Zusammensetzung nach einem der Ansprüche 1 bis 7,
dadurch gekennzeichnet, daß
das Gewichtsverhältnis zwischen Alkylbenzylsulfonat und Alkyl-polyalkylenoxy-sulfat oder -carbonat einen Wert mm Bereich von 1:15 bis 2:1 hat.

9. Zusammensetzung nach einem der Ansprüche 1 bis 8,
dadurch gekennzeichnet, daß
der Gesamtanteil an Tensid 5 bis 25 Gew.-% des Gewichts der Zusammensetzung ausmacht.

10. Zusammensetzung nach einem der Ansprüche 1 bis 9,
dadurch gekennzeichnet, daß
die Zusammensetzung zusätzlich zu dem/den angegebenen Tensid(en) in einem kleinen Anteil - bezogen auf das Gesamtgewicht aller Tenside - andere anionische oder nichtionische Tenside enthält.

11. Zusammensetzung nach einem der Ansprüche 1 bis 10,
dadurch gekennzeichnet, daß
der Anteil an gelöstem, mehrwertigem Metallsalz oder gelöstem, mehrwertigem Metallhydroxid 2 bis 45 Gew.-% beträgt, bezogen auf das Gesamtgewicht der Zusammensetzung.

12. Zusammensetzung nach einem der Ansprüche 1 bis 11,
dadurch gekennzeichnet, daß
die Zusammensetzung suspendierte Feststoffe enthält.

13. Zusammensetzung nach Anspruch 12,
dadurch gekennzeichnet, daß
als solche suspendierten Feststoffe dienen, ein Überschuß an diesem mehrwertigen Metallsalz oder an diesem mehrwertigen Metallhydroxid, ein weitgehend in Wasser unlösliches Beschwerungsmittel und/oder Gesteinsstückchen

14. Verfahren zur Herstellung einer gießbaren, wässrigen Zusammensetzung nach einem der Ansprüche 1 bis 13,
gekennzeichnet durch
Umsetzung eines mehrwertigen Metallsalzes oder eines mehrwertigen Metallhydroxids mit einer Alkyl-benzylsulfonsäure, oder Umsetzung eines wasserlöslichen Salzes einer Alkyl-benzylsulfonsäure mit einer schwächeren Base als dieses mehrwertige Metallsalz oder mehrwertige Metallhydroxid,
je in einem wässrigen Medium,
das eine Alkyl-polyalkylenoxy-schwefelsäure oder deren wasserlösliches Salz, oder
das eine Alkyl-polyalkylenoxy-carbonsäure oder deren wasserlösliches Salz
enthält.

15. Verfahren nach Anspruch 14,
dadurch gekennzeichnet, daß
dieses Salz dieser Poly-alkylenoxy-schwefelsäure oder Poly-alkylenoxy-carbonsäure ein mehrwertiges Metallsalz ist.

16. Verfahren zur Herstellung eines Bohrschlammes und/oder einer Spültrübe (zum Herausspülen des Bohrkleins sowie zur Kühlung und Schmierung des Bohrwerkzeugs)
gekennzeichnet durch die Verfahrensschritte:
- Erzeugung eines wässrigen Konzentrates, enthaltend
-- Wasser,
-- ein mehrwertiges Metallsalz von C₈₋₂₀-Alkyl-benzylsulfonsäure, und
-- ein mehrwertiges Metallsalz einer Alkyl-polyalkenyloxyschwefelsäure mit 1 bis 50 Mol Ethoxygruppen oder ein mehrwertiges Metallsalz einer Alkyl-polyalkenyloxy-carbonsäure mit 1 bis 50 Mol Ethoxygruppen
bei einer ausreichend hohen Konzentration, um eine mobile G-Phase zu bilden; und
- Zugabe einer ausreichenden Menge Wasser, Lauge oder Salzlösung zu diesem Konzentrat, um eine sphärolithische Zusammensetzung zu bilden.

17. Verfahren nach Anspruch 16,
dadurch gekennzeichnet, daß
dieses wässrige Konzentrat eine ausreichende Menge mehrwertiges Metallsalz oder mehrwertiges Metallhydroxid enthält, oder
zu dem wässrigen Konzentrat eine ausreichende Menge mehrwertiges Metallsalz oder mehrwertiges Metallhydroxid hinzugefügt wird, um einen Bohrschlamm und/oder eine Spültrübe bereitzustellen, der/die eine Dichte größer 0,9 g/cm³ aufweist.

18. Verwendung einer gießbaren, wässrigen Zusammensetzung nach einem der Ansprüche 1 bis 13
als Bohrschlamm und/oder Spültrübe oder zur Zubereitung eines Bohrschlammes und/oder einer Spültrübe.

## Revendications

1. Composition aqueuse versable, comprenant au moins 2% en poids d'un sel de métal polyvalent soluble dans l'eau d'un acide (alcoyl en C₈-C₂₀)polyalcoylèneoxysulfurique ou d'un acide (alcoyl en C₈-C₂₀)polyalcoylèneoxycarboxylique, au moins 1% en poids d'un sel de métal polyvalent d'un acide (alcoyl en C₈-C₂₀)benzènesulfonique et facultativement, un sel ou une base soluble dans l'eau, inorganique, d'un métal polyvalent.

2. Composition suivant la revendication 1, contenant au moins 1% en poids d'un sel ou une base soluble dans l'eau, inorganique, d'un métal polyvalent, où le sel ou la base de métal polyvalent est présente en une quantité suffisante pour former un système tensioactif structuré sphérolitique.

3. Composition suivant la revendication 1, contenant suffisamment de tensioactif pour former une phase G.

4. Composition suivant l'une quelconque des revendications précédentes, ayant une masse spécifique située dans l'intervalle allant de 0,8 g/cm³ à 3,5 g/cm³.

5. Composition suivant la revendication 4, ayant une masse spécifique située dans l'intervalle allant de 1,0 g/cm³ à 2,0 g/cm³.

6. Composition suivant l'une quelconque des revendications précédentes, dans laquelle le métal polyvalent est Ca, Mg, Zn, Ba ou Fe.

7. Composition suivant l'une quelconque des revendications précédentes, dans laquelle l'acide alcoylpolyalcoylèneoxysulfurique ou l'acide alcoylpolyalcoylèneoxycarboxylique a 1 à 50 radicaux éthylèneoxy.

8. Composition suivant l'une quelconque des revendications précédentes, ayant un rapport pondéral de l'alcoylbenzènesulfonate à l'alcoylpolyalcoylèneoxysulfonate ou -carbonate allant de 1:15 à 2:1.

9. Composition suivant l'une quelconque des revendications précédentes, dans laquelle la concentration totale en tensioactif se situe dans l'intervalle allant de 5 à 25% en poids.

10. Composition suivant l'une quelconque des revendications précédentes, dans laquelle le tensioactif comprend en outre, un proportion mineure, sur base du poids total de tensioactif, d'autres tensioactifs anioniques ou non ioniques.

11. Composition suivant l'une quelconque des revendications précédentes, dans laquelle la concentration du sel ou de la base de métal polyvalent dissoute se situe dans l'intervalle allant de 2% à 45%, sur base du poids total de la composition.

12. Composition suivant l'une quelconque des revendications précédentes, contenant des solides en suspension.

13. Composition suivant la revendication 12, dans laquelle les solides en suspension comprennent un excès du sel ou de la base de métal polyvalent, un agent de charge sensiblement insoluble dans l'eau et/ou des déblais de forage.

14. Procédé de préparation d'une composition suivant l'une quelconque des revendications précédentes, qui comprend la réaction d'un sel ou d'une base d'un métal polyvalent avec un acide alcoylbenzènesulfonique ou un sel soluble dans l'eau de celui-ci, avec une base qui est une base plus faible que le sel ou la base de métal polyvalent, dans un milieu aqueux contenant un acide alcoylpolyalcoylèneoxysulfurique ou un acide alcoylpolyalcoylèneoxycarboxylique ou un sel soluble dans l'eau de ceux-ci.

15. Procédé suivant la revendication 14, dans lequel le sel de l'acide alcoylpolyalcoylèneoxysulfurique ou -carboxylique est un sel de métal polyvalent.

16. Procédé de préparation d'une boue de forage, qui comprend l'obtention d'un concentré, qui contient de l'eau, un (alcoyl en C₈-C₂₀)benzènesulfonate de métal polyvalent et un (alcoyl en C₈-C₂₀)éthoxy (1 à 50 moles)sulfate ou -carbonate de métal polyvalent, à une concentration suffisante pour former une phase G mobile, l'addition au concentré de suffisamment d'eau ou de saumure pour procurer une composition sphérolitique.

17. Procédé suivant la revendication 16, dans lequel le concentré contient ou on y ajoute suffisamment de sel et/ou de base de métal polyvalent pour procurer une boue de forage ayant une masse spécifique supérieure à 0,9 g/cm³.

18. Utilisation d'une composition suivant l'une quelconque des revendications 1 à 13 en tant que, ou pour préparer une, boue de forage.
